Europäisches Patentamt

(19) European Patent Office

Office européen des brevets

(11) Veröffentlichungsnummer: **0 143 388**
**B1**

(12) **EUROPÄISCHE PATENTSCHRIFT**

(45) Veröffentlichungstag der Patentschrift:
18.05.88

(51) Int. Cl.⁴: **G 01 N 27/56,** F 23 N 5/00

(21) Anmeldenummer: 84113642.7

(22) Anmeldetag: 12.11.84

(54) **Regelvorrichtung für einen Heizungsbrenner.**

(30) Priorität: 23.11.83 DE 3342339

(43) Veröffentlichungstag der Anmeldung:
05.06.85 Patentblatt 85/23

(45) Bekanntmachung des Hinweises auf die Patenterteilung:
18.05.88 Patentblatt 88/20

(84) Benannte Vertragsstaaten:
AT BE CH DE LI NL SE

(56) Entgegenhaltungen:
EP-A-0 092 132
DE-A-3 117 790
FR-A-2 408 835
US-A-3 948 081

PATENTS ABSTRACTS OF JAPAN, Band 3, Nr. 49
(M-57), 26. April 1979, Seite 154 M57; & JP - A - 54 29
133 (SHIN NIPPON SEITETSU K.K.) 05.03.1979
PATENTS ABSTRACTS OF JAPAN, Band 6, Nr. 100
(P-121) 978 , 9. Juni 1982; & JP - A - 57 34 443
(MITSUBISHI DENKI K.K.) 24.02.1982

(73) Patentinhaber: **Siemens Aktiengesellschaft Berlin und München, Wittelsbacherplatz 2, D-8000 München 2 (DE)**

(72) Erfinder: **Kögler, Georg, Rosenstrasse 20, D-8561 Reichenschwand (DE)**

**Beschreibung**

Die Erfindung betrifft eine Regelvorrichtung für einen Heizungsbrenner mit einer im Abgasstrom des Brenners angeordneten λ-Sonde und einem der λ-Sonde nachgeschalteten Regler, der die Luftzufuhr oder die Brennstoffzufuhr für den Heizungsbrenner so einstellt, daß bei der Verbrennung die Luftzahl λ einen vorgegebenen Sollwert λs erreicht.

Bei herkömmlichen Heizungsbrennern, z. B. Ölbrennern, wird das Massenverhältnis zwischen Brennstoff, z. B. Öl und Luft fest eingestellt. Damit können jedoch keine optimalen Verbrennungsverhältnisse, wie sie sich bei einem stöchiometrischen Brennstoff-Luftverhältnis ergeben würden, erreicht werden. Um zu verhindern, daß bei einer Schwankung des Brennstoff-Luftverhältnisses, beispielsweise durch Veränderungen der Viskosität des Heizöle oder des Drucks der Ansaugluft ein Luftmangel mit nachfolgender starker Rußbildung auftritt, muß ein verhältnismäßig hoher Luftüberschuß eingestellt werden. Das als Luftzahl bezeichnete Verhältnis von tatsächlich zugeführter Sauerstoffmenge zu der bei einer stöchiometrischen Verbrennung erforderlichen Sauerstoffmenge liegt im allgemeinen zwischen 1,2 und 1,5. Dieser Luftüberschuß, der aufgrund der festen Einstellung des Brennstoff-Luftverhältnisses zwangsläufig erforderlich ist, führt zu erhöhten Abgasverlusten durch die zusätzlich aufzuheizende Luftmenge. Außerdem können je nach Flammentemperaturen Stickoxide oder andere Schadstoffe bebildet werden. Mit einem stöchiometrischen bzw. nahezu stöchiometriechen Brennstoff-Luftverhältnis ist auch die geringste Schadstoffemission verbunden. Dem Ideal einer stöchiometrischen Verbrennung könnte man vor allem mit sogenannten Vergasungsbrennern, bei denen ein flüssiger Brennstoff (Öl) vor der Verbrennung katalytisch zersetzt wird, sehr nahe kommen.

Eine Verringerung der Luftzahl auf Werte in der Nähe von λ = 1 ist ohne Gefahr einer Rußbildung nur möglich, wenn das Brennstoff-Luftverhältnis kontinuierlich geregelt wird. In dem Forschungsbericht T 80 054 des Bundesministeriums für Forschung und Technologie ist eine Regelvorrichtung für Heizungsanlagen der eingangs genannten Art beschrieben. Dabei wird die Luftzahl mit einer sogenannten λ-Sonde erfaßt. Da der Zusammenhang zwischen Luftüberschuß und Ausgangsspannung der λ-Sonde stark nichtlinear und außerdem von der Temperatur der λ-Sonde abhängig ist, wird zur Regelung lediglich der beim Übergang von Luftzahlwerten unter 1 auf Werte über 1 auftretende Spannungssprung in der Ausgangsspannung der λ-Sonde ausgewertet. Da jedoch die Luftzahl im praktischen Betrieb stets geringfügig über 1 liegen muß, um eine Rußbildung mit Sicherheit zu verhindern, sind zwei Verfahren vorgeschlagen, den in einer Abgasprobe enthaltenen überschüssigen Sauerstoff zu entfernen. Dies kann entweder durch Zudosieren eines mit dem Sauerstoff reagierenden Hilfsgases, z. B. Wasserstoff oder durch elektrolytisches Abpumpen des Sauerstoffs mit Hilfe einer Zirkonoxid-Festelektrolytzelle erfolgen. Die Wasserstoffmenge, die der Abgasprobe zugeführt werden muß, um an der λ-Sonde eine Luftzahl λ = 1 zu erreichen bzw. die entsprechende Menge Sauerstoff, die entfernt werden muß, wird gemessen und stellt ein Maß für den Luftüberschuß dar. Die beiden genannten Verfahren verursachen jedoch einen erheblichen Mehraufwand und verringern außerdem die erreichbare Regelgenauigkeit.

Aus der FR-A-2 408 835 ist eine λ-Sonde zur Messung des Sauerstoffgehalts in Abgasen von Verbrennungsmotoren bekannt. Der λ-Sonde ist über einen Differenzverstärker eine Regelschaltung nachgeschaltet, die das Kraftstoff-Luftverhältnis im Motor regelt.

Eine ähnliche Anordnung ist aus den "Patents Abstracts of Japan zu JP-A-5 734 443" bekannt. Dabei wird ebenfalls das Abgas einer Verbrennungsmaschine mit einer λ-Sonde gemessen. Das Luft-Brennstoffverhältnis wird lediglich über einen Komparator eingestellt.

Aus der EP-A-0 092 132 ist eine λ-Sonde bekannt, die über einen Integrator die Sauerstoffzufuhr steuert. Dabei kann die Zeitkonstante des Integrators in Abhängigkeit vom Gas-Durchsatz verändert werden.

Aufgabe der Erfindung ist es, eine Regelvorrichtung der eingangs genannten Art so auszugestalten, daß beliebige Luftzahlen mit der λ-Sonde direkt geregelt werden können.

Diese Aufgabe wird erfindungsgemäß dadurch gelöst, daß die Ausgangsspannung der λ-Sonde einem Eingang eines Differenzverstärkers und einem Eingang eines Komparators zugeführt wird, daß an einem zweiten Eingang des Differenzverstärkers und am Vergleichseingang des Komparators eine dem Sollwert entsprechende Sollspannung ansteht, daß der Differenzverstärker den Regler ansteuert, daß der Regler Integralverhalten aufweist und daß seine Zeitkonstante vergrößert wird, wenn der Komparator angesprochen hat.

Durch den I-Regler wird die Luftzahl genau auf jeden beliebigen Sollwert gebracht. Ohne zusätzliche Maßnahmen würde sich allerdings kein befriedigendes Regelverhalten ergeben, da die Spannungskennlinie der λ-Sonde in Abhängigkeit vom Istwert der Luftzahl λ stark unterschiedliche Steigungen aufweist, je nachdem, ob der eingestellte Sollwert λs über- oder unterschritten wird. Die Zeitkonstante des Reglers könnte daher nicht für beide Fälle ausreichend angepaßt werden. Dieses Problem wird durch die Umschaltung der Zeitkonstante des Reglers in Abhängigkeit vom Ausgangssignal eines Komparators gelöst. Solange die genannte Kennlinie der λ-Sonde nämlich eine große Steigung aufweist, wird die Zeitkonstante des Integrators vergrößert und bei kleiner Steigung der Kennlinie wieder verkleinert. Damit wird das Regelverhalten bezüglich des λ-Sollwerts symmetriert.

Schaltungsmäßig kann die Beeinflussung der Zeitkonstante vorteilhafterweise dadurch erreicht werden, daß der Ausgang des Differenzverstärkers über einen Umschalter und mindestens einen von zwei Widerständen mit unterschiedlichen Widerstandswerten mit dem Eingang des Reglers verbunden ist und daß der Komparator den Umschalter ansteuert und damit die Zeitkonstante des Reglers bestimmt.

Das Ausgangssignal der λ-Sonde kann einem ersten Eingang mindestens eines weiteren Differenzverstärkers zugeführt sein, an dessen zweitem Eingang eine von der Sollspannung abweichende Vergleichsspannung ansteht, wobei der Ausgang jedes weiteren Differenzverstärkers über je eine Entkopplungsdiode und einen Widerstand mit dem Eingang des Reglers verbunden ist, wobei auch der erstgenannte Differenzverstärker über mindestens einen Widerstand mit dem Integrator verbunden ist und wobei jeder einem weiteren Differenzverstärker zugeordnete Widerstand einen kleineren Wert hat als jeder dem ersten Differenzverstärker zugeordnete Widerstand. Damit wird eine schnellere Regelung erreicht, wenn der Istwert der Luftzahl λ relativ weit von seinem Sollwert $λ_s$ entfernt ist. Besonders ungünstige Luftzahlen λ werden damit schnell wieder ausgeregelt. Dabei kann ein symmetrisches Verhalten bezüglich des Luftzahl-Sollwertes $λ_s$ erreicht werden, wenn zwei weitere Differenzverstärker vorgesehen sind, von denen einem eine über der Sollspannung und einem eine unter der Sollspannung liegende Vergleichsspannung zugeführt wird.

Wenn die Temperatur der λ-Sonde nicht konstant ist, wird vorteilhafterweise zum vorgegebenen λ-Sollwert ein von der Temperatur der λ-Sonde abhängiger Korrekturwert addiert. Mit dieser Korrektur wird die Temperaturabhängigkeit der Ausgangsspannung der λ-Sonde kompensiert, so daß keine Temperaturregelung für die λ-Sonde erforderlich ist.

Die Temperaturkorrektur kann schaltungsmäßig auf vorteilhafte Weise dadurch erreicht werden, daß dem Ausgang der λ-Sonde ein Umschalter nachgeschaltet ist, der diesen Ausgang periodisch abwechselnd mit den Differenzverstärkern und dem Komparator bzw. über einen Widerstand mit einer Wechselspannungsquelle verbindet, daß der Verbindungspunkt von Umschalter und Widerstand über einen Gleichrichter mit einer Abtast-Halte-Schaltung verbunden ist, daß der Ausgang der Abtast-Halte-Schaltung mit einem ersten Eingang einer Summierschaltung verbunden ist, an deren zweitem Eingang eine Hilfssollspannung ansteht und daß am Ausgang der Summierschaltung die Sollspannung ansteht.

Vorteilhafterweise wird die Sollspannung unterhalb eines vorgegebenen Leistungswertes des Heizungsbremmers mit sinkender Leistung verringert. Es hat sich nämlich herausgestellt, daß bei kleineren Brennerleistungen die Gefahr einer Rußbildung größer wird, wenn man bei einer Luftzahl λ nahe 1 arbeitet. Durch die Verringerung der Sollspannung wird bei kleinen Leistungen die Luftzahl λ erhöht.

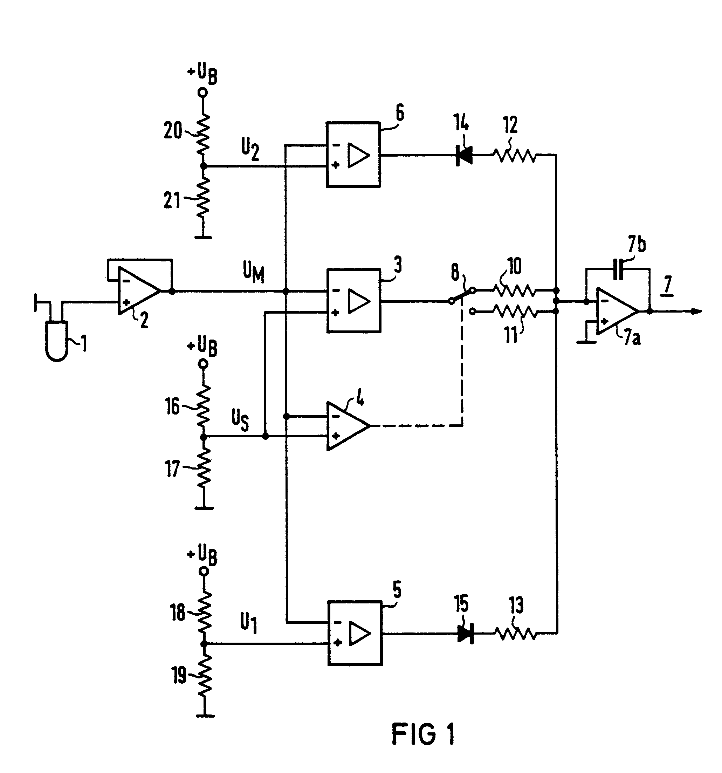

Ausführungsbeispiele der Erfindung werden nachfolgend anhand der Figuren 1 bis 7 näher erläutert.

Fig. 1 zeigt ein Schaltbild eines ersten Ausführungsbeispiels, bei dem eine konstante Temperatur der λ-Sonde vorausgesetzt wird. Eine λ-Sonde 1, die beispielsweise wie im eingangs erläuterten Forschungsbericht T 80-054 erläutert aufgebaut sein kann, ist mit einem Impedanzwandler 2 verbunden. Mit diesem Impedanzwandler 2 wird erreicht, daß die λ-Sonde 1 nahezu nicht mit Strom belastet wird, so daß ihr Innenwiderstand in das Meßergebnis nicht eingeht. Der Ausgang des Impedanzwandlers 2, an dem die Meßspannung $U_M$ der λ-Sonde 1 ansteht, ist mit jeweils einem ersten Eingang von Differenzverstärkern 3, 5, 6 und einem ersten Eingang eines Komparators 4 verbunden. Jeweils der zweite Eingang des Differenzverstärkers 3 und des Komparators 4 ist mit der Anzapfung eines aus Widerständen 16 und 17 bestehenden Spannungsteilers verbunden. Mit diesem Spannungsteiler, der an eine Betriebsspannung $+U_B$ angeschlossen ist, wird die Sollspannung $U_S$ erzeugt. Dem zweiten Eingang des Differenzverstärkers 5 wird eine von einem Spannungsteiler, der aus Widerständen 18 und 19 besteht, erzeugte Vergleichsspannung $U_1$ und dem zweiten Eingang des Differenzverstärkers 6 wird eine von einem Spannungsteiler mit den Widerständen 20 und 21 erzeugte Vergleichsspannung $U_2$ zugeführt. Auch die beiden letztgenannten Spannungsteiler sind mit der Betriebsspannung $+U_B$ verbunden. Der Ausgang des Differenzverstärkers 3 ist mit dem Umschaltkontakt eines Umschalters 8 verbunden. Ein Schaltkontakt des Umschalters 8 ist über einen Widerstand 10 und der zweite Schaltkontakt des Umschalters 8 über einen Widerstand 11 mit einem Integrator 7 verbunden. Der Integrator 7 besteht aus einem Operationsverstärker 7a, der einen Rückkopplungskondensator 7b aufweist, der zwischen seinen invertierenden Eingang und seinen Ausgang geschaltet ist. Der invertierende Eingang des Operationsverstärkers 7a stellt außerdem den Eingang des Integrators 7 dar. Der Umschalter 8 wird vom Komparator 4 angesteuert.

Der Differenzverstärker 5 ist über eine Diode 15 und einen Widerstand 13 ebenfalls mit dem Eingang des Integrators 7 verbunden. Dabei liegt der Ausgang des Differenzverstärkers 5 an der Anode der Diode 15. Der Differenzverstärker 6 ist über eine Diode 14 und einen Widerstand 12 ebenfalls mit dem Eingang des Integrators 7 verbunden. Der Ausgang des Differenzverstärkers 6 liegt an der Kathode der Diode 14.

Die Wirkungsweise der Schaltung nach Fig. 1 wird im folgenden anhand der Diagramme nach Fig. 2 und Fig. 3 erläutert.

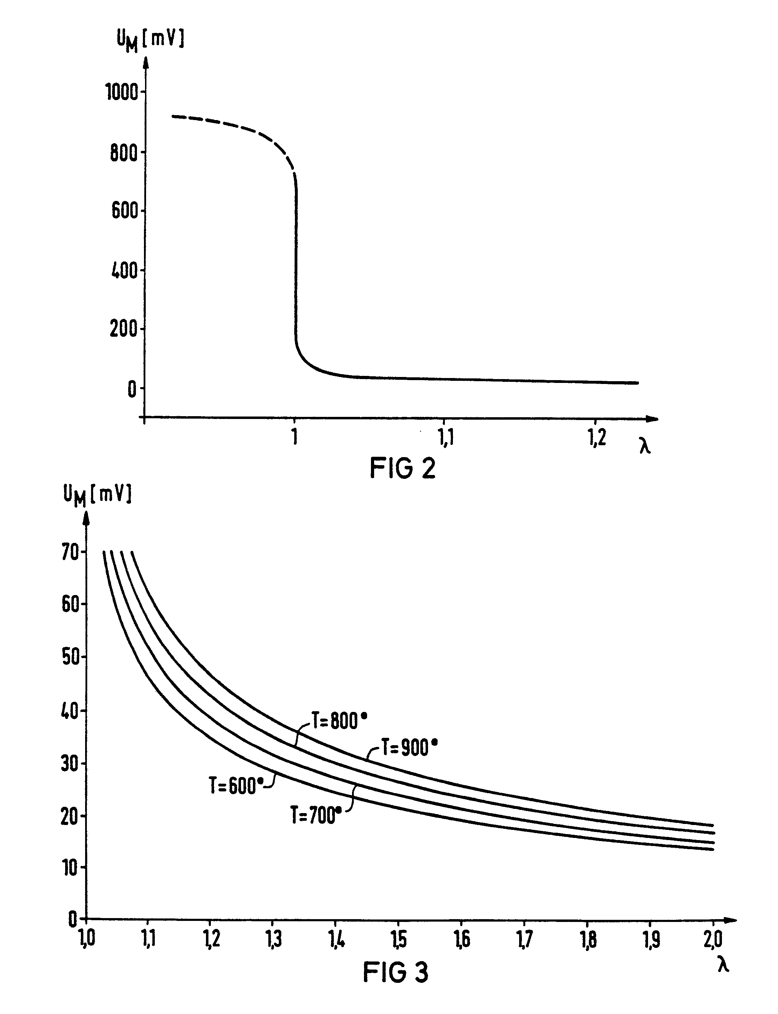

Fig. 2 zeigt den Verlauf der Ausgangsspannung $U_M$ der $\lambda$-Sonde in Abhängigkeit von der Luftzahl $\lambda$. Dabei ist deutlich sichtbar, daß die Spannung $U_M$ bei der Luftzahl $\lambda = 1$ einen Sprung aufweist und dann bei Luftzahlen, die etwas über 1 liegen, stark nichtlinear ist.

Fig. 3 zeigt nochmals in vergrößertem Maßstab die Meßspannung für Luftzahlen $\lambda$ zwischen 1,0 und 2,0. Dabei sind außerdem unterschiedliche Temperaturen der $\lambda$-Sonde als Parameter angegeben. Damit wird deutlich, daß die Meßspannung $U_M$ auch stark von der Temperatur T der $\lambda$-Sonde abhängt. Beim Ausführungsbeispiel nach Fig. 1 wird jedoch vorausgesetzt, daß diese Temperatur T z. B. durch eine Regeleinrichtung konstant gehalten wird.

Die Meßspannung $U_M$, die über den Impedanzwandler 2 geführt wurde, wird im Differenzverstärker 3 von der Sollspannung $U_S$, die der Soll-Luftzahl $\lambda_s$ entspricht, subtrahiert. Wenn man davon ausgeht, daß die Meßspannung $U_M$ größer als die Sollspannung $U_S$ ist, wird die Differenz über den Umschalter 8 und den Widerstand 10 dem Integrator 7 zugeführt. Der Integrator 7, der entweder die Luftzufuhr oder die Brennstoffzufuhr einstellt, verändert diese solange, bis die Meßspannung $U_M$ gleich der Sollspannung $U_S$ ist. Die Eingangsspannung des Integrators 7 ist dann O, so daß dieser seine Ausgangsspannung und damit die Luft- bzw. Brennstoffzufuhr konstant hält, bis durch eine Störgröße die Luftzahl $\lambda$ wieder geändert wird.

Die Reglerkonstante, die von der durch den Widerstand 10 und de Kondensator 7b bestimmten Zeitkonstante, sowie von der Steigung der Meßspannung $U_M$ bezüglich der Luftzahl $\lambda$ abhängt, muß an die Zeitkonstante des Regelkreises angepaßt sein, um ein befriedigendes Regelverhalten zu erzielen. Wenn jedoch die Meßspannung $U_M$ kleiner als die Sollspannung $U_S$ wird, so wird die Steigung der Meßspannung $U_M$ bezüglich der Luftzahl $\lambda$ kleiner. Damit würde ohne zusätzliche Maßnahmen die Zeitkonstante des Reglers größer sein und wäre damit nicht mehr an die Regelstrecke angepaßt. Außerdem würde sich ein stark unsymmetrisches Regelverhalten bezüglich des Sollwertes $U_S$ ergeben. Um dies zu verhindern, wird bei Meßwerten $U_M < U_S$ durch den Komparator 4 der Umschalter 8 umgeschaltet, so daß nunmehr die Zeitkonstante des Integrators 7 nicht mehr durch den Widerstand 10, sondern durch den Widerstand 11 bestimmt wird. Der Widerstand 11 weist einen kleineren Widerstandswert als der Widerstand 10 auf, so daß durch eine Verkleinerung der Zeitkonstante des Integrators 7 die Abnahme der Steilheit der Kennlinie von $U_M$ kompensiert wird. Dies gilt natürlich nur in der Umgebung des Sollwerts $U_S$, was aber letztlich für das Regelverhalten entscheidend ist.

Bei schnellen Laständerungen bzw. bei Störeinflüssen kann der Istwert der Luftzahl unter Umständen weitab von seinem Sollwert liegen. In diesem Fall ist eine schnelle Regelung besonders wichtig, da sonst z. B. bei Luftzahlen unter 1 eine starke Rußbildung und bei Luftzahlen über 1 eine Abnahme des Wirkungsgrades auftritt.

Um eine beschleunigte Regelung zu erreichen, wenn der Meßwert $U_M$ weitab vom Sollwert $U_S$ liegt, sind zwei weitere Differenzverstärker 5 und 6 vorgesehen. Mit Spannungsteilern mit den Widerständen 18, 19, bzw. 20, 21 werden aus der Betriebsspannung $U_B$ zwei Vergleichsspannungen $U_1$ und $U_2$ abgeleitet. Dabei liegt die Vergleichsspannung $U_2$ über der Sollspannung $U_S$ und die Vergleichsspannung $U_1$ unter der Sollspannung $U_S$. Die Vergleichsspannung $U_2$ wird dem positiven Eingang des Differenzverstärkers 6 und die Vergleichsspannung $U_1$ dem positiven Eingang des Differenzverstärkers 5 zugeführt. Am negativen Eingang beider Differenzverstärker 5 und 6 steht jeweils die Meßspannung $U_M$ an. Der Ausgang des Differenzverstärkers 6 ist über die Reihenschaltung einer Diode 14 und eines Widerstandes 12 mit dem Eingang des Integrators 7 verbunden, wobei die Kathode der Diode 14 dem Ausgang des Differenzverstärkers 6 zugewandt ist. Der Ausgang des Differenzverstärkers 5 ist über die Reihenschaltung einer Diode 15 und eines Widerstandes 13 ebenfalls mit dem Eingang des Integrators 7 verbunden, wobei in diesem Fall die Anode der Diode 15 dem Differenzverstärker 5 zugewandt ist.

Wenn der Meßwert $U_M$ die Spannung $U_2$ überschreitet, so liefert der Differenzverstärker 6 eine Ausgangsspannung, die für die Diode 14 in Leitrichtung liegt. Diese Ausgangsspannung wird daher auf den Integrator 7 aufgeschaltet. Der Widerstand 12 weist einen kleineren Widerstandswert als die Widerstände 10 und 11 auf, so daß die Zeitkonstante des Integrators 7 durch den geschilderten Eingriff des Differenzverstärkers 6 verringert wird. Damit wird also eine schnellere Regelung erreicht, bis die Meßspannung $U_M$ kleiner als $U_2$ und damit wieder in der Nähe ihres Sollwerts $U_S$ ist. Der analoge Vorgang läuft ab, wenn die Meßspannung $U_M$ kleiner als die Spannung $U_1$ wird. In diesem Falle wird die Ausgangsspannung des Differenzverstärkers 5 positiv und die Diode 15 leitend. Über den Widerstand 13, der ebenfalls einen kleineren Widerstandsweit als die Widerstände 10 und 11 aufweist, erfolgt dann ebenfalls eine schnelle Regelung. Eine Verringerung der Reglerzeitkonstante ist in analoger Weise auch möglich, wenn man die Verstärkung der Differenzverstärker 5 und 6 erhöht.

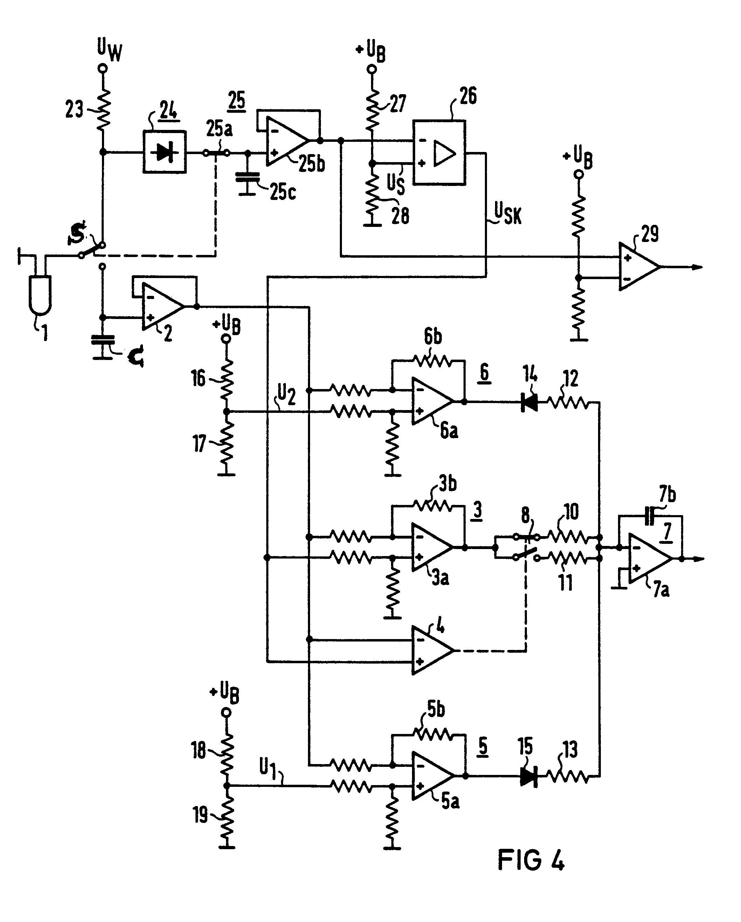

Die bisher gezeigte Schaltung kann nur dann eingesetzt werden, wenn die Temperatur der $\lambda$-Sonde konstant ist, da sich sonst die Meßspannung $U_M$ in Abhängigkeit von der Isttemperatur der λ-Sonde ändert. Es muß daher z. B. eine Heizeinrichtung mit einer Regelung für die λ-Sonde vorgesehen werden, die diese auf konstanter Temperatur hält. Eine derartige Temperaturregelung der λ-Sonde kann entfallen, wenn man eine Schaltung nach Fig. 4 einsetzt.

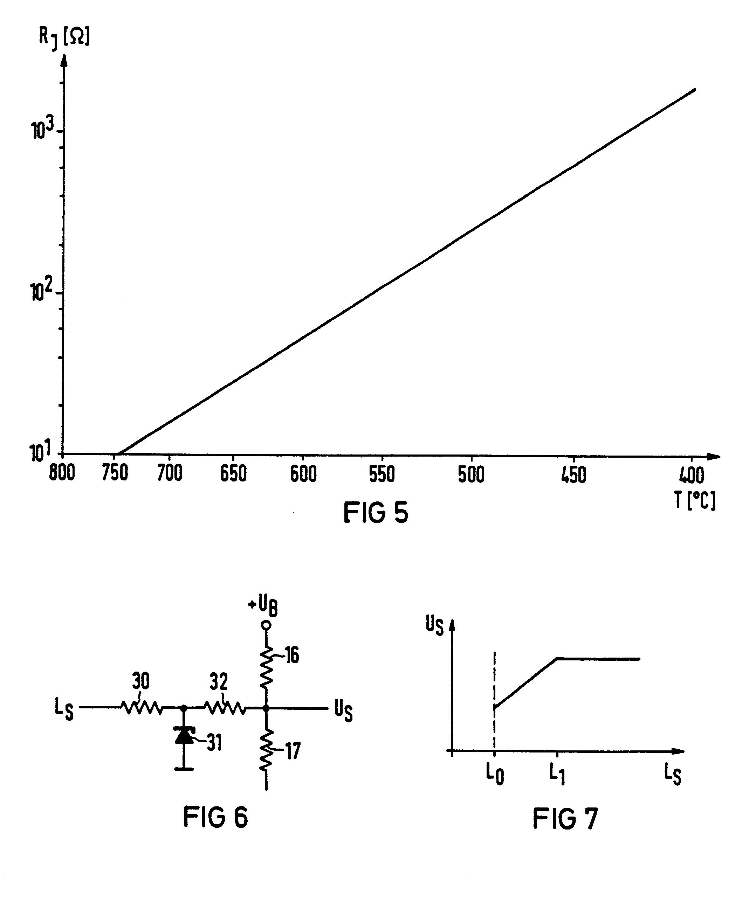

Bei dieser Schaltung wird die Tatsache ausgenutzt; daß der Innenwiderstand $R_J$ der λ-Sonde von der Sondentemperatur T abhängig ist, wie in Fig. 5 dargestellt. Bei der Schaltung nach Fig. 4 wird der Ausgang der λ-Sonde 1 über den Umschalter 21 periodisch abwechselnd mit dem Eingang des Impedanzwandlers 2 und über einen Widerstand 23 mit einer Wechselspannungsquelle $U_W$ verbunden. Dem Eingang des Impedanzwandlers 2 ist ein Kondensator C parallel geschaltet, der den Meßwert für die Luftzahl λ speichert, während der Umschalter S auf die Wechselspannungsquelle $U_W$ umgeschaltet ist. Am Verbindungspunkt von Widerstand 23 und Umschalter S wird die an der λ-Sonde 1 abfallende Spannung abgegriffen und mit einem schwellwertfreien Gleichrichter 24 gleichgerichtet. Die gleichgerichtete Spannung wird einer Sample-and-hold-Schaltung 25 zugeführt. Diese besteht aus einem eingangsseitigen Schalter 25a, der immer dann geschlossen ist, wenn der Schalter S auf die Wechselspannungsquelle $U_W$ umgeschaltet hat. Dem Schalter 25a ist ein Impedanzwandler 25b nachgeschaltet, dem eingangsseitig ein Kondensator 25c parallel geschaltet ist. Der Kondensator 25c speichert den bei geschlossenen Schaltern S und 25a gewonnenen Meßwert ab. Der abgespeicherte Wert wird dem negativen Eingang eines Summierers 26 zugeführt, an dessen positivem Eingang die Sollspannung $U_S$ für die Luftzahl ansteht. Diese Sollspannung $U_S$ wird mit dem Spannungsteiler 27, 28 aus der Betriebsspannung $U_B$ gewonnen. Am Ausgang des Summierers steht dann ein korrigierter Sollwert $U_{SK}$ an, der anstelle des ursprünglichen Sollwerts $U_S$ den Differenzverstärkern 3, 5, 6 und dem Komparator 4 zugeführt wird. Damit wird erreicht, daß der Temperatureinfluß auf die Meßspannung $U_M$ kompensiert wird. Die übrige Schaltung ist identisch mit der Schaltung nach Fig. 1.

Die Temperaturerfassung bei der Schaltung nach Fig. 4 kann gleichzeitig zur Überwachung ausgenutzt werden, ob der Brenner eine Flamme aufweist. Ein derartiges Signal wird bei der Brennerüberwachung benötigt, um beispielsweise bei erloschener Flamme die Brennstoffzufuhr zu unterbrechen. Dazu wird das am Ausgang der Sample-and-hold-Schaltung 25 anstehende temperaturproportionale Signal mit einem Komparator 29 mit einer Referenzspannung verglichen, wobei die Referenzspannung so gewählt ist, daß am Ausgang des Komparators 29 nur dann ein Plussignal ansteht, wenn eine Flamme brennt.

Es hat sich herausgestellt, daß bei kleinerem Brennerleistungen die Gefahr einer Rußbildung

größer wird, wenn die Luftzahl in der Nähe von 1 liegt. Mit einer Schaltung nach Fig. 6 kann man die Luftzahl λ bei kleinen Brennerleistungen anheben. Dabei wird der Leistungssollwert $L_S$ über die Reihenschaltung zweier Widerstände 30 und 32 mit der Anzapfung des Spannungsteilers 16 und 17 verbunden, an der der Sollwert $U_S$ für die Regelung ansteht. Der Verbindungspunkt der beiden Widerstände 30 und 32 ist über eine Z-Diode 31 an das Bezugspotential der Schaltung gelegt. Fig. 7 zeigt den Einfluß des Leistungssollwertes $L_S$ auf den Sollwert $U_S$, der mit dieser Schaltung erzielt wird. Oberhalb eines festgelegten Leistungswertes $L_1$, der durch die Zenerspannung der Z-Diode und die Widerstandswerte festgelegt ist, ist die Sollspannung $U_S$ vom Leistungssollwert $L_S$ unabhängig. Unterhalb dieses Leistungswertes $L_1$ nimmt jedoch der Sollwert $U_S$ mit dem Leistungssollwert $L_S$ linear ab. Der Leistungssollwert $L_S$ wird im allgemeinen nicht unter einen Wert $L_0$ verringert, der die untere Leistungsgrenze des Brenners darstellt. Durch die Verringerung der Sollspannung-$U_S$ wird bei niedrigen Brennerleistungen, wie gewünscht, die Luftzahl λ erhöht.

Die beschriebene Regeleinrichtung ermöglicht es, auch ohne aufwendige und wartungsbedürftige Zusatzeinrichtungen im Abgaskanal die Luftzahl bei einem Heizungsbrenner auf jeden praktisch sinnvollen Wert zu regeln. Dabei kann gegebenenfalls auch auf eine Temperaturregeleinrichtung für die λ-Sonde sowie auf eine gesonderte Flammenüberwachung verzichtet werden.

**Patentansprüche**

1. Regelvorrichtung für einen Heizungsbrenner mit einer im Abgasstrom des Brenners angeordneten λ-Sonde (1) und einem der λ-Sonde (1) nachgeschalteten Regler (7), der die Luftzufuhr oder die Brennstoffzufuhr für den Heizungsbrenner so einstellt, daß bei der Verbrennung die Luftzahl λ einen vorgegebenen Sollwert $λ_s$ erreicht,
<u>dadurch gekennzeichnet,</u>
daß die Ausgangsspannung ($U_M$) der λ-Sonde (1) einem Eingang eines Differenzverstärkers (3) und einem Eingang eines Komparators (4) zugeführt wird, daß an einem zweiten Eingang des Differenzverstärkers (3) und am Vergleichseingang des Komparators (4) eine dem Sollwert ($λ_s$) entsprechende Sollspannung ($U_S$) ansteht, daß der Differenzverstärker (3) den Regler (7) ansteuert, daß der Regler (7) Integralverhalten aufweist und daß seine Zeitkonstante vergrößert wird, wenn der Komparator (4) angesprochen hat.

2. Regelvorrichtung nach Anspruch 1,
<u>dadurch gekennzeichnet,</u>
daß der Ausgang des Differenzverstärkers (3) über einen Umschalter (8, 9) und mindestens einen von zwei Widerständen (10, 11) mit unterschiedlichen Widerstandswerten mit dem Eingang des Reglers (7) verbunden ist und daß der Komparator (4) den Umschalter (8, 9) ansteuert und damit die Zeitkonstante des Reglers (7) bestimmt.

3. Regelvorrichtung nach Anspruch 1 oder 2, dadurch gekennzeichnet, daß das Ausgangssignal der λ-Sonde (1) einem ersten Eingang mindestens eines weiteren Differenzverstärkers (5, 6) zugeführt ist, an dessen zweitem Eingang eine von der Sollspannung (U$_S$) abweichende Vergleichsspannung (U$_1$, U$_2$) ansteht und daß der Ausgang jedes weiteren Differenzverstärkers über je eine Entkopplungsdiode (14, 15) und einen Widerstand (12, 13) mit dem Eingang des Reglers (7) verbunden ist, daß auch der erstgenannte Differenzverstärker (3) über mindestens einen Widerstand (10, 11) mit dem Integrator (7) verbunden ist und daß jeder erstgenannte Widerstand (12, 13) einen kleineren Wert hat als jeder zweitgenannte Widerstand (10, 11).

4. Regelvorrichtung nach Anspruch 3, dadurch gekennzeichnet, daß für den Fall von zwei weiteren Differenzverstärkern (5, 6) dem einen (6) eine über der Sollspannung (U$_S$) und dem anderen (5) eine unter der Sollspannung (U$_S$) liegende Vergleichsspannung (U$_1$ U$_2$) zugeführt wird.

5. Regelvorrichtung nach einem der Ansprüche 1 bis 4, dadurch gekennzeichnet, daß bei nichtkonstanter Temperatur der λ-Sonde (1) zum vorgegebenen λ-Sollwert (λ$_s$) ein von der Temperatur der λ-Sonde (1) abhängiger Korrekturwert addiert wird.

6. Regelvorrichtung nach Anspruch 5, dadurch gekennzeichnet, daß dem Ausgang der λ-Sonde (1) ein Umschalter (S) nachgeschaltet ist, der diesen Ausgang periodisch abwechselnd mit Differenzverstärkern (3, 5, 6) und dem Komparator (4) bzw. über einen Widerstand (23) mit einer Wechselspannungsquelle (U$_W$) verbindet, daß der Verbindungspunkt von Umschalter (S) und Widerstand (23) über einen Gleichrichter (24) mit einer Abtast-Halte-Schaltung (25) verbunden ist, daß der Ausgang der Abtast-Halte-Schaltung (25) mit dem ersten Eingang einer Summierschaltung (26) verbunden ist, an derem zweiten Eingang die Sollspannung (U$_S$) ansteht und daß am Ausgang der Summierschaltung (26) eine korrigierte Sollspannung (U$_{SK}$) ansteht, die anstelle der ursprünglichen Sollspannung (U$_S$) den Differenzverstärkern (3, 5, 6) und dem Komparator (4) zugeführt wird.

7. Regelvorrichtung nach einem der Ansprüche 1 bis 6, dadurch gekennzeichnet, daß die Sollspannung (U$_S$) unterhalb eines vorgegebenen Leistungswertes (L$_1$) des Heizungsbrenners mit sinkender Leistung verringert wird.

**Claims**

1. Regulating device for a heating burner with a λ-probe (1) disposed in the exhaust gas stream of the burner and a regulator (7), connected after the λ-probe (1), which adjusts the air supply or fuel supply for the heating burner such that, during combustion, the Luftzahl λ reaches a prescribed desired value λ$_s$, characterised in that the output voltage (U$_M$) of the λ-probe (1) is supplied to an input of a differential amplifier (3) and an input of a comparator (4), in that a desired voltage (U$_S$), corresponding to the desired value (λ$_s$), appears at a second input of the differential amplifier (3) and at the comparison input of the comparator (4), in that the differential amplifier (3) controls the regulator (7), in that the regulator (7) has an integrating action and in that its time constant is increased when the comparator (4) has responded.

2. Regulating device according to claim 1, characterised in that the output of the differential amplifier (3) is connected, via a change-over switch (8, 9) and at least one of two resistances (10, 11) with different resistance values, to the input of the regulator (7) and in that the comparator (4) triggers the change-over switch (8, 9) and thereby determines the time constant of the regulator (7).

3. Regulating device according to claim 1 or 2, characterised in that the output signal of the λ-probe (1) is supplied to a first input of at least one further differential amplifier (5, 6), at the second input of which a comparison voltage (U$_1$, U$_2$), deviating from the desired voltage (U$_S$), appears, and in that the output of each further differential amplifier is connected, each via one decoupling diode (14, 15) and a resistance (12, 13), to the input of the regulator (7), in that the first-named differential amplifier (3) is also connected via at least one resistance (10, 11) to the integrator (7) and in that each first-named resistance (12, 13) has a smaller value than each second-named resistance (10, 11).

4. Regulating device according to claim 3, characterised in that the case of two further differential amplifiers (5, 6), a comparison voltage (U$_1$, U$_2$) lying above the desired voltage (U$_S$) is supplied to one (6) and a comparison voltage (U$_1$, U$_2$) lying below the desired voltage (U$_S$) is supplied to the other (5).

5. Regulating device according to one of claims 1 to 4, characterised in that where the temperature of the λ-probe (1) is not constant, a correction value dependent on the temperature of the λ-probe (1) is added to the prescribed λ-desired value (λ$_s$).

6. Regulating device according to claim 5, characterised in that connected after the output of the λ-probe (1) is a change-over switch (S) which periodically connects this output alternately to differential amplifiers (3, 5, 6) and the comparator (4) or via a resistance (23) to an alternating voltage source (U$_W$), in that the

connection point of change-over switch (S) and resistance (23) is connected via a rectifier (24) to a sample-and-hold circuit (25), in that the output of the sample-and-hold circuit (25) is connected to the first input of a summation circuit (26), at the second input of which appears the desired voltage ($U_S$) and in that at the output of the summation circuit (26) appears a corrected desired voltage ($U_{SK}$) which is supplied to the differential amplifiers (3, 5, 6) and to the comparator (4) instead of the original desired voltage ($U_S$).

7. Regulating device according to one of claims 1 to 6,

characterised in that the desired voltage ($U_S$) is lowered below a preset power value ($L_1$) of the heating burner with decreasing power.


**Revendications**

1. Dispositif de régulation pour un brûleur de chauffage comportant une sonde λ (1) placée dans le courant des gaz de combustion du brûleur, et un régulateur (7) qui est branché en aval de la sonde a (1) et règle l'alimentation en air ou l'alimentation en combustible pour le brûleur de chauffage de manière que, lors de la combustion, l'indice d'air λ atteigne une valeur de consigne prédéterminée $\lambda_s$, caractérisé par le fait que la tension de sortie ($U_M$) de la sonde λ (1) est envoyée à une entrée d'un amplificateur différentiel (3) et à une entrée d'un comparateur (4), qu'une tension de consigne ($U_S$) correspondant à la valeur de consigne ($\lambda_s$) est appliquée à une seconde entrée d'un amplificateur différentiel (3) et à l'entrée de comparaison du comparateur (4), que l'amplificateur différentiel (3) commande le régulateur (7), que ce dernier possède un comportement d'intégrateur et que sa constante de temps est accrue lorsque le comparateur (4) a répondu.

2. Dispositif de régulation suivant la revendication 1, caractérisé par le fait que la sortie de l'amplificateur différentiel (3) est reliée par l'intermédiaire d'un commutateur (8, 9) et d'au moins une de deux résistances (10, 11) possédant des valeurs résistives différentes, à l'entrée du régulateur (7) et que le comparateur (4) commande le commutateur (8, 9) et détermine par conséquent la constante de temps du régulateur (7).

3. Dispositif de régulation suivant la revendication 1 ou 2, caractérisé par le fait que le signal de sortie de la sonde λ (1) est envoyé à une première entrée d'au moins un autre amplificateur différentiel (5, 6), à la seconde entrée duquel est appliquée une tension de comparaison ($U_1$, $U_2$) qui diffère de la tension de consigne ($U_S$), et que la sortie de chaque autre amplificateur différentiel est reliée respectivement per l'intermédiaire d'une diode de découplage (14, 15) et d'une résistance (12, 13) à l'entrée du régulateur (7), que l'amplificateur différentiel (3) indiqué en premier est relié par l'intermédiaire d'au moins une résistance (10, 11) à l'intégrateur (7) et que chaque résistance (12, 13) mentionnée en premier possède une valeur inférieure à chaque résistance (10, 11) mentionnée en second.

4. Dispositif de régulation suivant la revendication 3, caractérisé par le fait que dans le cas où il est prévu deux autres amplificateur différentiels (5, 6), des tensions de comparaison ($U_1$, $U_2$) respectivement supérieure et inférieure à la tension de consigne ($U_S$) sont envoyées respectivement à l'un (6) et à l'autre (5) de ces amplificateurs.

5. Dispositif de régulation suivant l'une des revendications 1 à 4, caractérisé par le fait que dans le cas où la température de la sonde λ (1) n'est pas constante, une valeur de correction, qui dépend de la température de la sonde λ (1), est ajoutée à la température de cette sonde de manière à fournir la valeur de consigne prédéterminée de λ ($\lambda_s$).

6. Dispositif de régulation suivant la revendication 5, caractérisé par le fait qu'en aval de la sortie de la sonde λ (1) se trouve branché un commutateur (S) qui relie périodiquement et en alternance cette sortie aux amplificateurs différentiels (3, 5, 6) et au comparateur (4) ou, par l'intermédiaire d'une résistance (23), à une source de tension alternative ($U_W$), que le point de jonction du commutateur (S) et de la résistance (23) est relié par l'intermédiaire d'un redresseur (24) à un circuit d'échantillonnage et de maintien (25), que la sortie du circuit d'échantillonnage et de maintien (25) est reliée à la première entrée d'un circuit additionneur (26), à la seconde entrée duquel est appliquée la tension de consigne ($U_S$), et qu'à la sortie du circuit additionneur (26) on dispose d'une tension de consigne corrigée ($U_{SK}$), qui est envoyée, à la place de la tension de consigne initiale ($U_S$), aux amplificateurs différentiels (3, 5, 6) et au comparateur (4).

7. Dispositif de régulation suivant l'une des revendications 1 à 6, caractérisé par le fait que la tension de consigne ($U_S$) est réduite, au-dessous d'une valeur de puissance prédéterminée ($L_1$) du brûleur de chauffage, lorsque la puissance diminue.

FIG 1

FIG 2

FIG 3

FIG 4

FIG 5

FIG 6

FIG 7